(19) **Europäisches Patentamt / European Patent Office / Office européen des brevets**

(11) **EP 1 999 906 B1**

(12) **EUROPÄISCHE PATENTSCHRIFT**

(45) Veröffentlichungstag und Bekanntmachung des Hinweises auf die Patenterteilung:
**23.12.2009 Patentblatt 2009/52**

(21) Anmeldenummer: **07727408.2**

(22) Anmeldetag: **27.03.2007**

(51) Int Cl.:
**H04L 12/56** *(2006.01)*

(86) Internationale Anmeldenummer:
**PCT/EP2007/052935**

(87) Internationale Veröffentlichungsnummer:
**WO 2007/113174 (11.10.2007 Gazette 2007/41)**

(54) **ROUTING-VERFAHREN**

ROUTING METHOD

PROCÉDÉ DE ROUTAGE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **30.03.2006 DE 102006014918**

(43) Veröffentlichungstag der Anmeldung:
**10.12.2008 Patentblatt 2008/50**

(73) Patentinhaber: **SIEMENS AKTIENGESELLSCHAFT 80333 München (DE)**

(72) Erfinder: **KUTSCHENREUTER, Matthias 80809 München (DE)**

(56) Entgegenhaltungen:
**WO-A-01/69866      US-A1- 2004 233 850**

• **VAN MIEGHEM P ET AL: "Hop-by-hop quality of service routing" COMPUTER NETWORKS, ELSEVIER SCIENCE PUBLISHERS B.V., AMSTERDAM, NL, Bd. 37, Nr. 3-4, 5. November 2001 (2001-11-05), Seiten 407-423, XP004309781 ISSN: 1389-1286**

EP 1 999 906 B1

**EP 1 999 906 B1**

**Beschreibung**

Die Erfindung betrifft ein Routing-Verfahren sowie einen Netzwerkknoten und ein Netzwerk.

Ein Netzwerk ermöglicht das Übermitteln von Nachrichten zwischen seinen Knoten. In einem Netzwerk sind nicht alle Knoten des Netzwerks mit allen weiteren Knoten direkt verbunden. Eine Nachricht von einem sendenden Knoten zu einem empfangenden Knoten muss daher oftmals über einen oder mehrere Zwischenknoten weitergeleitet werden, um vom sendenden Knoten zum empfangenden Knoten zu gelangen. Der Weg vom sendenden Knoten über die Zwischenknoten zum empfangenden Knoten wird dabei als Pfad oder Route bezeichnet.

Um aus einer großen Menge von theoretisch möglichen Pfaden im Netzwerk für eine Nachricht einen geeigneten Pfad auszuwählen, kommt ein Routing-Verfahren zum Einsatz. Das Routing-Verfahren ermittelt zuerst wenigstens einen, zweckmäßig aber eine Mehrzahl von Pfadkandidaten, entlang derer die Nachricht übermittelt werden könnte. Im Folgenden wird den Pfadkandidaten jeweils ein Pfaddistanzwert, eine sog. Routenmetrik, zugeordnet. Der Pfaddistanzwert ist ein Maß für die Qualität eines Pfadkandidaten. Der Pfaddistanzwert wiederum wird üblicherweise aus Linkdistanzwerten bestimmt, die wiederum ein Maß für die Qualität von einzelnen Links des jeweiligen Pfadkandidaten sind. Als Link wird hierbei die direkte Verbindung zweier Knoten des Netzwerks bezeichnet.

In den Pfaddistanzwert können beispielsweise Nutzungskosten für einen Link des Pfades oder die Anzahl der Links eines Pfades eingehen. Weiterhin ist es möglich, dass Werte für eine Übertragungsqualität entlang des Pfadkandidaten oder eines Links des Pfadkandidaten oder Werte für die Übertragungsgeschwindigkeit des Pfadkandidaten oder eines Links des Pfadkandidaten eingehen. Der Pfadkandidat mit dem optimalen Pfaddistanzwert wird in der Folge als Pfad ausgewählt. Die Nachricht kann nun entlang dieses Pfades übermittelt werden.

Die Verfahren zur Ermittlung des Pfaddistanzwertes werden als Routing-Metriken bezeichnet. Eine bekannte Routing-Metrik ist ETX (Expected Transmission Count). Mit der Routing-Metrik ETX wird derjenige Pfad ausgewählt, bei dem die zu erwartende Anzahl an Übertragungen am geringsten ist. Unter Übertragungen sind hierbei sowohl Erstübertragungen (Transmissions) als auch wiederholte Übertragungen (Retransmissions) zu verstehen. Eine erste Übertragung ist die Übertragung eines Pakets über einen Link. Eine wiederholte Übertragung findet statt, wenn die erste Übertragung nicht erfolgreich war. Zur Bestimmung der Linkdistanzwerte werden bei ETX Datenpaketankunftsraten verwendet, die von den zwei zu dem jeweiligen Link gehörigen Knoten ermittelt werden. Zur Ermittlung der Datenpaketankunftsraten werden in regelmäßigen Zeitabständen ETX-Nachrichten versendet.

Es ist möglich, dass ein Routing-Verfahren nur Pfadkandidaten mit geringer Qualität, d.h. mit einem schlechten Pfaddistanzwert, ermittelt und somit bei der Auswahl des Pfades aus diesen Pfadkandidaten wiederum ein Pfad von geringer Qualität gewählt werden muss, obwohl Pfade mit hoher Qualität existieren. Es können beispielsweise Routing-Nachrichten der Pfade mit hoher Qualität zufällig miteinander kollidieren, so dass diese Pfade nicht gefunden werden.

Aus der US 2004/0233850 A1 ist ein Routing-Verfahren für ein Netzwerk bekannt, bei dem ein oder mehrere Pfadkandidaten zwischen einem Quellknoten und einem Zielknoten ermittelt werden, welche aus jeweils wenigstens zwei Knoten bestehen. Wenigstens einer der Knoten eines der Pfadkandidaten ermittelt hierbei eine Routenmetrik für wenigstens einen Teil des Pfadkandidaten. Bei der Ermittlung eines oder mehrerer Pfadkandidaten wird ein zwischen zwei Knoten gebildeter Link verworfen, wenn seine Routenmetrik einen Schwellwert über-/unterschreitet.

Aus van Mieghem et al.: "Hop-by-Hop Quality of Service Routing" Computer Networks, Elsevier Science Publishers B.V., Amsterdam, NL, Bd. 37, Nr. 3-4, 5. November 2001, Seiten 400 bis 423, ist ein weiteres Routing-Verfahren für ein Netzwerk bekannt, bei welchem ein Pfad von einem Quell- zu einem Zielknoten ermittelt wird unter der Bedingung, dass für jeden Link zwischen zwei Netzknoten eine oder mehrere Bedingungen vorgegeben sind.

Ein weiters Routing-Verfahren für ein Netzwerk ist aus der WO 01/69866 A1 bekannt, bei welchem eine Minimierung der Verbindungskosten zwischen jeweiligen Netzknoten des Netzwerks vorgenommen wird.

Die der Erfindung zugrunde liegende Aufgabe ist es, ein Routing-Verfahren anzugeben, das es erlaubt, bessere Pfade zu ermitteln.

Diese Aufgabe wird durch ein Routing-Verfahren gemäß Anspruch 1 gelöst. Weitere Lösungen bestehen in einem Netzwerkknoten gemäß Anspruch 7 und einem Netzwerk gemäß Anspruch 9.

Beim Routing-Verfahren für ein Netzwerk werden ein oder mehrere Pfadkandidaten bestehend aus jeweils wenigstens zwei Knoten ermittelt. Weiterhin ermittelt wenigstens einer der Knoten eines der Pfadkandidaten eine Routenmetrik für wenigstens einen Teil des Pfadkandidaten. Der Pfadkandidat wird verworfen, wenn seine Routenmetrik einen Schwellwert über- oder unterschreitet. Hierbei wird eine Routenmetrik verwendet, die als Linkmetrik eine um einen Bestrafungsfaktor korrigierte Datenpaketankunftsrate verwendet. Dadurch ergibt sich der Vorteil, dass diejenigen Pfadkandidaten, die verworfen werden, nicht mehr als Pfad gewählt werden können. Dadurch wiederum wird erreicht, dass bessere Pfade gewählt werden.

Wird als zur Ermittlung der Routenmetrik bspw. das sog. ETX verwendet, so ist es zweckmäßig, Pfadkandidaten zu verwerfen, wenn deren Routenmetrik den Schwellwert überschreitet. Der Schwellwert liegt hier zweckmäßig größer als 5, insbesondere 8. Bei anderen Metriken können andere Schwellwerte sinnvoll sein, bspw. 0,1. Ebenso ist es möglich, dass bei Verwendung anderer Metriken ein Pfadkandidat zweckmäßig dann verworfen wird, wenn seine Routenmetrik den Schwellwert unterschreitet.

Bevorzugt werden wenigstens zwei Pfadkandidaten ermittelt. Weiterhin ist es zweckmäßig, für jeden der Pfadkandidaten eine Routenmetrik zu ermitteln.

Unter einem Verwerfen eines Pfadkandidaten kann bspw. verstanden werden, dass dieser Pfadkandidat nicht weiter berücksichtigt wird. Weiterhin kann es bspw. bedeuten, dass wenigstens ein Knoten für einen verworfenen Pfad keine weiteren Routing-Nachrichten mehr an andere Knoten versendet.

In einer vorteilhaften Ausgestaltung und Weiterbildung der Erfindung wird als der wenigstens eine Knoten ein Startknoten oder ein Endknoten des Pfadkandidaten verwendet. Als Startknoten wird dabei derjenige Knoten eines Pfadkandidaten verstanden, der eine Ermittlung der Pfadkandidaten ausgelöst hat. Unter Endknoten wird das Ziel eines mithilfe der Pfadkandidaten zu ermittelnden Pfades verstanden. Hier ergibt sich der Vorteil, dass der Startknoten, der den Pfad benötigt, eine bessere Kontrolle über die Ermittlung der Pfadkandidaten hat. Dadurch wird erreicht, dass der Startknoten Pfadkandidaten bspw. dann nicht verwirft, wenn nur sehr wenige Pfadkandidaten ermittelt werden können.

In einer weiteren vorteilhaften Ausgestaltung und Weiterbildung der Erfindung wird als der wenigstens eine Knoten ein Zwischenknoten des Pfadkandidaten verwendet. Unter Zwischenknoten wird jeder Knoten des Pfadkandidaten verstanden, der nicht dem Start- oder Endknoten entspricht. Diese Vorgehensweise hat den Vorteil, dass Pfadkandidaten bereits verworfen werden, bevor sie beim Startknoten des Pfadkandidaten ankommen. Dadurch wird erreicht, dass Pfadkandidaten geringer Qualität sehr schnell verworfen werden und somit die Belastung des Netzwerks mit Routing-Nachrichten verringert wird. Unter Zwischenknoten werden diejenigen Knoten eines Pfadkandidaten verstanden, die nicht dem Startknoten entsprechen.

Gemäß einer zweckmäßigen Ausgestaltung ergibt sich die Routenmetrik nach folgender Formel:

$$R = \prod_{Links} LM = \prod_{Links}(D \cdot P)$$

R        Routenmetrik
LM       Linkmetrik
D        Datenpaketankunftsrate
P        Bestrafungsfaktor
Links    Anzahl der Links des Pfadkandidaten.

Der Netzwerkknoten weist wenigstens eine Empfangseinrichtung zum Empfangen von Routenrückmeldungen, insbesondere Route-Reply-Nachrichten, und wenigstens eine Datenverarbeitungseinrichtung auf, die derart ausgestaltet ist, dass bei Empfang einer zu einem Pfadkandidaten gehörigen Routenrückmeldung für wenigstens einen Teil des Pfadkandidaten eine Routenmetrik ermittelt wird und der Pfadkandidat verworfen wird, wenn seine Routenmetrik einen Schwellwert zumindest erreicht. Die Datenverarbeitungsvorrichtung ist derart ausgestaltet, dass eine Routenmetrik verwendet wird, bei der als Linkmetrik eine um einen Bestrafungsfaktor korrigierte Datenpaketsankunftsrate verwendet wird.

Bevorzugt ist der Netzwerkknoten derart ausgestaltet, dass der Pfadkandidat nur verworfen wird, wenn der Netzwerkknoten einem Startknoten oder Endknoten des Pfadkandidaten entspricht.

Das Netzwerk weist wenigstens einen Knoten auf, der wenigstens eine Empfangseinrichtung zum Empfangen von Routenrückmeldungen, insbesondere Route-Reply-Nachrichten, und wenigstens eine Datenverarbeitungseinrichtung aufweist, die derart ausgestaltet ist, dass bei Empfang einer zu einem Pfadkandidaten gehörigen Routenrückmeldung für wenigstens einen Teil des Pfadkandidaten eine Routenmetrik ermittelt wird und der Pfadkandidat verworfen wird, wenn seine Routenmetrik einen Schwellwert zumindest erreicht. Die Datenverarbeitungsvorrichtung ist derart ausgestaltet, dass eine Routenmetrik verwendet wird, bei der als Linkmetrik eine um einen Bestrafungsfaktor korrigierte Datenpaketsankunftsrate verwendet wird.

Bevorzugt weist das Netzwerk alternativ oder zusätzlich Knoten auf, die derart ausgestaltet sind, dass der Pfadkandidat nur verworfen wird, wenn der Netzwerkknoten einem Startknoten oder Endknoten des Pfadkandidaten entspricht.

Weitere Einzelheiten und Vorteile der Erfindung werden anhand von in der Zeichnung dargestellten Ausführungsbeispielen näher erläutert. Dabei zeigt

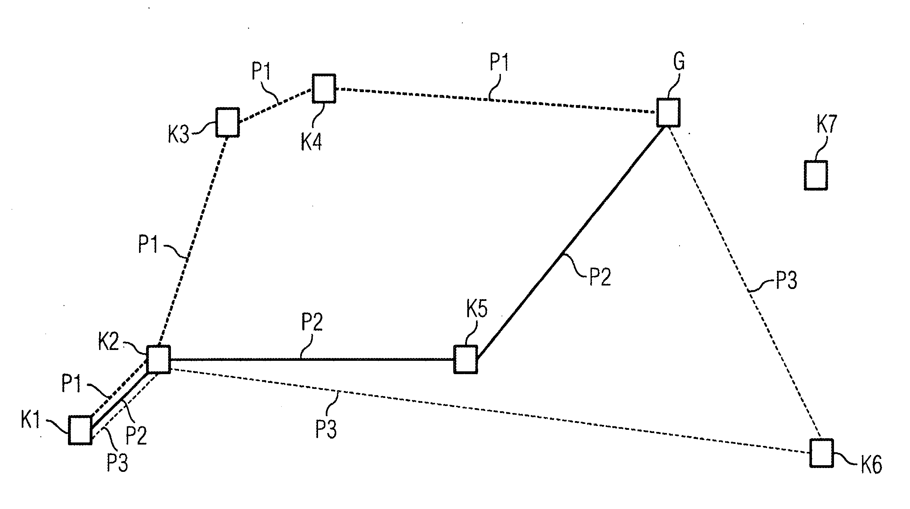

Figur 1       ein Ad-hoc-Netzwerk

Das Ad-hoc-Netzwerk gemäß Figur 1 enthält einen ersten bis siebten Knoten K1...7 und ein Gateway G.

In der beispielhaften Umsetzung der Erfindung gemäß Figur 1 möchte der erste Knoten K1 eine Nachricht an das Gateway G senden. Es wird für dieses Beispiel davon ausgegangen, dass keiner der Knoten K1...7 einen Pfad zum Gateway G kennt und deshalb ein solcher Pfad vollständig ermittelt werden muss.

Zur Ermittlung des Pfades wird das Routing-Protokoll AODV (Ad-hoc On-Demand Distance Vector) verwendet. AODV sieht vor, dass der erste Knoten K1 eine sog. Route-Request-Nachricht per Broadcast an weitere Knoten in seiner Umgebung sendet.

Diese wiederum leiten die Route-Request-Nachricht weiter. Eine Route wird bestimmt, wenn der RREQ das Ziel erreicht. Diese Route wird per sog. Route-Reply-Nachricht per Unicast zurück an den Ursprung der Route-Request-Nachricht, d.h. an den ersten Knoten K1 geschickt. Dazu hat jeder Knoten K1...7, der die Anfrage empfangen und weitergeleitet hat, den Knoten K1...7 gespeichert, von dem er die Route-Request-Nachricht erhalten hat.

Auf diese Weise ergeben sich in diesem Beispiel beim ersten Knoten K1 drei Pfadkandidaten P1...3, entlang derer die Nachricht von diesem an das Gateway G übermittelt werden kann. Der erste Pfadkandidat P1 führt dabei vom ersten Knoten K1 über den zweiten, dritten und vierten Knoten K2, 3, 4 zum Gateway G. Der zweite Pfadkandidat P2 führt vom ersten Knoten K1 über den zweiten und fünften Knoten K2,5 zum Gateway G. Der dritte Pfadkandidat P3 führt vom ersten Knoten K1 über den zweiten und sechsten Knoten K2,6 zum Gateway G. Der siebte Knoten K7 kommt in diesem Beispiel in keinem der Pfadkandidaten P1...3 vor.

Um die Pfadkandidaten P1...3 an den ersten Knoten K1 zu übermitteln, werden nun Route-Reply-Nachrichten entlang der Pfadkandidaten zurück an den ersten Knoten K1 gesendet. So sendet das Gateway G eine Route-Reply-Nachricht für den ersten Pfadkandidaten P1 an den vierten Knoten K4. Dieser sendet eine Route-Reply-Nachricht an den dritten Knoten K3. Der wiederum sendet eine Route-Reply-Nachricht an den zweiten Knoten K2, der eine Route-Reply-Nachricht an den ersten Knoten K1 sendet.

Beim Empfang einer Route-Reply-Nachricht ermittelt der empfangende Knoten K1...7 jeweils eine Routenmetrik für den jeweiligen Pfadkandidaten P1...3. Diese bezieht sich dabei auf den Teil des Pfadkandidaten P1...3 vom Ziel, d.h. in diesem Beispiel dem Gateway G bis zum jeweiligen Knoten K1...7. Die Routenmetrik wird dann in der Route-Reply-Nachricht weitergegeben, sodass der erste Knoten K1 schließlich die gesamte Routenmetrik für jeden der Pfadkandidaten P1...3 bestimmen kann.

Als Routing-Metrik, d.h. als Vorschrift zur Ermittlung der Routenmetriken kommt hierbei eine Routenmetrik zum Einsatz, bei der als Linkmetrik eine Datenpaketankunftsrate verwendet wird. Diese wiederum wird von den Knoten K1...7 aus sog. Hello-Nachrichten oder Metrik-Nachrichten ermittelt, die in regelmäßigen zeitlichen Abständen versendet werden. Hat der fünfte Knoten K5 bspw. vom Gateway G von den letzten m Hello-Nachrichten die letzten n empfangen, so bestimmt er die Datenpaketankunftsrate bzgl. des Links zwischen sich und dem Gateway G zu n/m. Aus den Linkmetriken der Links wird die Routenmetrik wiederum durch das Produkt der Linkmetriken bestimmt. Hierbei wird für jeden Link ein Bestrafungsfaktor in das Produkt aufgenommen, sodass sich als Formel für die Routenmetrik ergibt:

$$(1) \qquad R = \prod_{Links} LM = \prod_{Links}(D \cdot P)$$

R      Routenmetrik
LM    Linkmetrik
D      Datenpaketankunftsrate
P      Bestrafungsfaktor
Links   Anzahl der Links des Pfadkandidaten P1...3

In diesem Beispiel wird als Bestrafungsfaktor 0,8 verwendet. Der Bestrafungsfaktor dient dazu, Pfadkandidaten P1...3 mit vielen Links eine geringere Qualität zuzuordnen, auch ihre einzelnen Linkmetriken sehr gut sind.

In diesem Ausführungsbeispiel der Erfindung vergleicht jeder Knoten K1...7, der eine Route-Reply-Nachricht empfängt, die Routenmetrik des jeweiligen Pfadkandidaten P1...3 mit einem Schwellwert. Der Schwellwert soll hierbei 0,2 betragen. Unterschreitet die bei einem Knoten K1...7 ermittelte Routenmetrik des jeweiligen Pfadkandidaten P1...3 den Schwellwert, so wird der jeweilige Pfadkandidaten P1...3 verworfen. Das bedeutet, der Knoten K1...7 sendet keine Route-Reply-Nachricht in Bezug auf den jeweiligen Pfadkandidaten P1...3 mehr weiter. Dadurch erreicht der verworfene Pfadkandidat P1...3 nicht den ersten Knoten K1 und kann somit auch nicht zur Übermittlung der Nachricht an das Gateway G verwendet werden. Auch der erste Knoten K1 selbst vergleicht die Routenmetrik eines ihm per Route-Reply-Nachricht übermittelten Pfadkandidaten P1...3 mit dem Schwellwert und verwirft den Pfadkandidaten P1...3, falls seine Routenmetrik den Schwellwert erreicht oder unterschreitet.

Optional kann der Schwellwert auch jeden anderen Wert haben. Für die in diesem Beispiel verwendete Routing-Metrik sind Werte zwischen 0 und 1 sinnvoll. Zweckmäßig sind Werte zwischen 0 und 0,4, bspw. 0,1 oder 0,2. Bei anderen Routing-Metriken wie bspw. ETX sind hingegen Schwellwerte größer als 1 sinnvoll. Zweckmäßig sind Schwellwerte größer als 5. Wird als Routing-Metrik bspw. ETX verwendet, so ist es zweckmäßig, Pfadkandidaten P1...3 zu verwerfen, wenn deren Routenmetrik den Schwellwert überschreitet.

Aus den nicht verworfenen Pfadkandidaten P1...3 wählt der erste Knoten K1 zuletzt denjenigen Pfadkandidaten mit der besten Routenmetrik. Bei der in diesem Beispiel verwendeten Metrik ist das derjenige Pfadkandidaten P1...3 mit der höchsten Routenmetrik.

Für die einzelnen Pfadkandidaten P1...3 ergibt sich aus dem angegebenen Schema der im Folgenden beschriebene Verlauf. Für die Linkmetriken werden hier jeweils beispielhafte Werte angenommen, die in der folgenden Tabelle zusammengefasst sind:

| Link zwischen: | Linkmetrik: |
| --- | --- |
| Gateway G, vierter Knoten K4 | 0,8 |
| Gateway G, fünfter Knoten K5 | 0,9 |
| Gateway G, sechster Knoten K6 | 0,6 |
| vierter Knoten K4, dritter Knoten K3 | 0,7 |
| dritter Knoten K3, zweiter Knoten K2 | 0,9 |
| zweiter Knoten K2, erster Knoten K1 | 0,9 |
| fünfter Knoten K5, zweiter Knoten K2 | 1 |
| sechster Knoten K6, zweiter Knoten K2 | 0,5 |

Beim ersten Pfadkandidaten P1 wird eine Route-Reply-Nachricht vom Gateway G an den vierten Knoten K4 gesendet. Dieser berechnet die Routenmetrik für den bisherigen ersten Pfad zu dem Produkt aus der Linkmetrik für diesen Link und dem Bestrafungsfaktor, also 0,8*0,8 = 0,64. Der Pfadkandidaten P1 wird daraufhin nicht verworfen, da seine Routenmetrik größer als 0,2 ist. Im Folgenden geht eine Route-Reply-Nachricht vom vierten Knoten K4 an den dritten Knoten K3. Dieser berechnet die Routenmetrik aus dem Produkt der bisherigen Routenmetrik und der Linkmetrik für den Link zwischen sich und dem vierten Knoten K4 sowie dem Bestrafungsfaktor, also 0,64*0,8*0,7 = 0,36. Nach einer Route-Reply-Nachricht an den zweiten Knoten K2 berechnet dieser die Routenmetrik zu 0,36*0,8*0,9 = 0,26. Der erste Knoten K1 berechnet nach der letzten Route-Reply-Nachricht die Routenmetrik zu 0,26*0,8*0,9 = 0,19. Der erste Pfadkandidat P1 wird also beim ersten Knoten K1 verworfen, da seine Routenmetrik dort kleiner als 0,2 ist.

Mit der gleichen Vorgehensweise ergibt sich beim zweiten Pfadkandidaten P2 beim fünften, zweiten und ersten Knoten je eine Routenmetrik von 0,72 bzw. 0,58 bzw. 0,41. Beim dritten Pfadkandidaten P3 ergeben sich Routenmetriken von 0,48 und 0,19 beim sechsten Knoten K6 bzw. beim zweiten Knoten K2. Der dritte Pfadkandidat P3 wird also bereits beim zweiten Knoten K2 verworfen, da bereits dort seine Routenmetrik kleiner als der Schwellwert von 0,2 ist. Der dritte Pfadkandidat P3 erreicht daher nicht den ersten Knoten K1.

In diesem Beispiel wird der erste Knoten daher den zweiten Pfadkandidaten P2, der als Einziger eine geeignete Routenmetrik aufweist, zur Übertragung der Nachricht an das Gateway G wählen.

In dieser Ausführungsform der Erfindung kann auch der Fall eintreten, dass sich kein Pfadkandidat P1...3 ergibt, der eine Routenmetrik aufweist, die größer als der Schwellwert ist. In diesem Fall setzt der erste Knoten das Routing-Verfahren so lange fort, bis sich ein geeigneter Pfadkandidat P1...3 ergibt.

Eine alternative Ausführungsform der Erfindung ergibt sich daraus, dass ein Pfadkandidat P1...3 nur vom ersten Knoten K1, d.h. von demjenigen Knoten K1, der die Nachricht übermitteln möchte, verworfen wird. Die anderen Knoten K2...7 führen keinen Vergleich der Routenmetrik mit dem Schwellwert durch und übermitteln also immer Route-Reply-Nächrichten.

Bei dieser Ausführungsform würde der erste Knoten K1 also von allen drei Pfadkandidaten P1...3 erfahren und würde seinerseits den ersten und dritten Pfadkandidaten P1,3 verwerfen. Gäbe es zu einem späteren Zeitpunkt den zweiten Pfadkandidaten P2 nicht oder wäre seine Routenmetrik ebenfalls schlechter als der Schwellwert, so bestünde optional die Möglichkeit, das Routing-Verfahren fortzusetzen und bspw. nach Ablauf einer festlegbaren Zeitspanne trotz der schlechten Routenmetriken einen der Pfadkandidaten P1...3 zu wählen.

Weitere Vorteile der Erfindung gehen aus einer im Folgenden beschriebenen Ausführungsvariante hervor, die sich ebenfalls auf das in Figur 1 dargestellte Adhoc-Netzwerk bezieht.

In dieser Variante wird die Routenmetrik für die Pfadkandidaten P1...3 bereits bei der Versendung der Route-Request-Nachrichten bestimmt und mit den Route-Request-Nachrichten weitergeleitet.

Bei der Ermittlung der Pfadkandidaten P1...3 sendet der erste Knoten K1 eine Route-Request-Nachricht per Broadcast. Diese erreicht in diesem Beispiel den zweiten Knoten K2. Dieser bestimmt die Routenmetrik für den Abschnitt zwischen sich und dem ersten Knoten K1 zu 0,8*0,9 = 0,72. Hierbei werden erneut die Linkmetriken aus obiger Tabelle zugrunde gelegt.

Der zweite Knoten K2 sendet eine weitere Route-Request-Nachricht per Broadcast, die den ersten, dritten, fünften und sechsten Knoten K1, 3, 5, 6 erreicht. Der erste Knoten ignoriert diese Route-Request-Nachricht. Der dritte, fünfte und sechste Knoten K3, 5, 6 bearbeiten die Route-Request-Nachricht und berechnen die Routenmetrik für die jeweiligen Abschnitte der Pfadkandidaten P1...3 zwischen sich und dem ersten Knoten K1 zu 0,72*0,9*0,8 = 0,52 für den dritten Knoten, 0,72*1*0,8 = 0,58 für den fünften Knoten und 0,72*0,5*0,8 = 0,29 für den sechsten Knoten.

In der Folge senden der dritte, fünfte und sechste Knoten K3, 5, 6 jeweils wieder je eine Route-Request-Nachricht. Hierbei kollidieren die Route-Request-Nachrichten des dritten und fünften Knotens K3, 5. Hierdurch kann weder einer der Knoten K1...7 noch das Gateway G die Route-Request-Nachrichten empfangen und der erste und zweite Pfadkandidat P1, 2 können nicht weiterverfolgt werden. Sie sind somit für die Ermittlung von Pfadkandidaten P1...3 verloren.

Eine Route-Request-Nachricht, die vom sechsten Knoten K6 gesendet wird, erreicht hingegen das Gateway G. Dieses berechnet die Routenmetrik für den jetzt vollständigen dritten Pfadkandidaten P3 zu 0,29*0,6*0,8 = 0,14.

In diesem Beispiel soll der Schwellwert für die Routenmetrik, ab dem ein Pfadkandidat P1...3 verworfen wird, 0,15 betragen. Die Routenmetrik des dritten Pfadkandidaten P3 ist geringer als der Schwellwert. Daher verwirft das Gateway G diesen Pfadkandidaten P3. Das Gateway G sendet also keine Route-Reply-Nachricht.

Dies passiert, obwohl kein weiterer Pfadkandidat P1...3 mehr bestimmt werden konnte. Das bedeutet wiederum, dass der erste Knoten K1 keine Rückmeldung über Pfadkandidaten P1...3 in Form von Route-Reply-Nachrichten erhalten wird und daher auch keinen Pfad zum Gateway G bestimmen kann. Der erste Knoten K1 kann daher die geplante Übermittlung einer Nachricht an das Gateway G nicht durchführen.

Nach Ablauf einer festgelegten Zeitspanne sendet der erste Knoten K1 daher erneut eine Route-Request-Nachricht. Es wird nun davon ausgegangen, dass keine Kollision von Route-Request-Nachrichten passiert und alle drei Pfadkandidaten P1...3 dem Gateway G bekannt werden. Das Gateway bestimmt die Routenmetriken für die drei Pfadkandidaten P1...3 zu 0,19 für den ersten Pfadkandidaten P1, 0,41 für den zweiten Pfadkandidaten P2 und wiederum 0,14 für den dritten Pfadkandidaten P3.

Das Gateway G verwirft nun den dritten Pfadkandidaten P3, da seine Routenmetrik kleiner ist als der Schwellwert von 0,15. Für den ersten und zweiten Pfadkandidaten P1, 2 sendet das Gateway G jeweils Route-Reply-Nachrichten. Erreichen diese über die jeweiligen Pfadkandidaten P1, 2 den ersten Knoten K1, so wählt dieser anhand der Routenmetrik den zweiten Pfadkandidaten P2 zur geplanten Übermittlung der Nachricht an das Gateway G.

Hierbei wird also der erste Knoten K1 gezwungen, nach Ablauf der festgelegten Zeitspanne eine zweite Route-Request-Nachricht zu versenden. Dafür wird jedoch erreicht, dass zur geplanten Übertragung der Nachricht an das Gateway G ein wesentlich besserer Pfad gefunden wird.

Die obigen Beispiele geben Ausführungsmöglichkeiten der Erfindung an. Es ist möglich, einzelne Elemente der verschiedenen Ausführungsformen miteinander zu kombinieren, um so weitere Ausführungsmöglichkeiten zu erhalten. Es ist bspw. auch möglich, dass mehr als zwei Route-Request-Nachrichten versendet werden müssen.

**Patentansprüche**

1. Routing-Verfahren für ein Netzwerk, wobei

    - ein oder mehrere Pfadkandidaten (P1...3) bestehend aus jeweils wenigstens zwei Knoten (K1...7) ermittelt werden;
    - wenigstens einer der Knoten (K1...7) eines der Pfadkandidaten (P1...3) eine Routenmetrik für wenigstens einen Teil des Pfadkandidaten (P1...3) ermittelt;
    - der Pfadkandidat (P1...3) verworfen wird, wenn seine Routenmetrik einen Schwellwert über-/unterschreitet; und wobei
    - eine Routenmetrik verwendet wird, die als Linkmetrik eine um einen Bestrafungsfaktor korrigierte Datenpaketsankunftsrate verwendet.

2. Verfahren nach Anspruch 1, wobei als der wenigstens eine Knoten ein Startknoten oder ein Endknoten des Pfadkandidaten (P1...3) verwendet wird.

3. Verfahren nach Anspruch 1, wobei als der wenigstens eine Knoten ein Zwischenknoten des Pfadkandidaten (P1...3) verwendet wird.

4. Verfahren nach einem der vorherigen Ansprüche, wobei sich die Routenmetrik nach folgender Formel ergibt:

$$R = \prod_{Links} LM = \prod_{Links} (D \cdot P) \,,$$

worin

R Routenmetrik
LM Linkmetrik
D Datenpaketankunftsrate
P Bestrafungsfaktor
Links Anzahl der Links des Pfadkandidaten.

5. Verfahren nach einem der vorherigen Ansprüche, wobei die Routenmetrik beim Empfang einer Route-Reply-Nachricht ermittelt wird.

6. Verfahren nach einem der Ansprüche 1 bis 4, wobei die Routenmetrik bei der Versendung einer Route-Request-Nachricht bestimmt und mit der Route-Request-Nachricht weitergeleitet wird.

7. Netzwerkknoten (K1...7) mit wenigstens einer Empfangseinrichtung zum Empfangen von Routenrückmeldungen, insbesondere Route-Reply-Nachrichten, und wenigstens einer Datenverarbeitungseinrichtung, die derart ausgestaltet ist, dass bei Empfang einer zu einem Pfadkandidaten (P1...3) gehörigen Routenrückmeldung für wenigstens einen Teil des Pfadkandidaten (P1...3) eine Routenmetrik ermittelt wird, wobei der Pfadkandidat (P1...3) verworfen wird, wenn seine Routenmetrik einen Schwellwert zumindest erreicht, und die Datenverarbeitungsvorrichtung derart ausgestaltet ist, dass eine Routenmetrik verwendet wird, bei der als Linkmetrik eine um einen Bestrafungsfaktor korrigierte Datenpaketsankunftsrate verwendet wird.

8. Netzwerkknoten (K1...7) nach Anspruch 7, der derart ausgestaltet ist, dass der Pfadkandidat (P1...3) nur verworfen wird, wenn der Netzwerkknoten (K1...7) einem Startknoten oder einem Endknoten des Pfadkandidaten (P1...3) entspricht.

9. Netzwerk mit Knoten (K1...7) gemäß Anspruch 7 und/ oder 8.

**Claims**

1. Routing method for a network, wherein

   - one or more path candidates (P1...3) consisting of at least two nodes (K1...7) in each case are determined;
   - at least one of the nodes (K1...7) of one of the path candidates (P1...3) determines a route metric for at least one part of the path candidate (P1...3);
   - the path candidate (P1...3) is rejected if its route metric exceeds or undershoots a threshold value; and wherein
   - a route metric is used which uses a data packet arrival rate corrected by a penalty factor as a link metric.

2. Method according to claim 1, wherein a start node or an end node of the path candidate (P1...3) is used as the at least one node.

3. Method according to claim 1, wherein an intermediate node of the path candidate (P1...3) is used as the at least one node.

4. Method according to one of the preceding claims, wherein the route metric ensues according to the following formula:

$$R = \prod_{Links} LM = \prod_{Links} (D \cdot P) \,,$$

where

R Route metric
LM Link metric
D Data packet arrival rate
P Penalty factor
Links Number of links of the path candidate

**5.** Method according to one of the preceding claims, wherein the route metric is determined on receipt of a route reply message.

**6.** Method according to one of claims 1 to 4, wherein the route metric is determined at the time of sending a route request message and is forwarded with the route request message.

**7.** Network node (K1...7) having at least one receipt unit for receiving route feedback messages, in particular route reply messages, and at least one data processing unit which is designed such that on receipt of a route feedback message belonging to a path candidate (P1...3) a route metric is determined for at least one part of the path candidate (P1...3), wherein the path candidate (P1...3) is rejected if its route metric at least reaches a threshold value, and the data processing apparatus is designed such that a route metric is used in which a data packet arrival rate corrected by a penalty factor is used as a link metric.

**8.** Network node (K1...7) according to claim 7, which is designed such that the path candidate (P1...3) is rejected only if the network node (K1...7) corresponds to a start node or an end node of the path candidate (P1...3).

**9.** Network node having nodes (K1...7) according to claim 7 and/or 8.

**Revendications**

**1.** Procédé de routage pour un réseau,

- un ou plusieurs chemins candidats (P1 ... 3) composés chacun d'au moins deux noeuds (K1 ... 7) étant déterminés,
- au moins l'un des noeuds (K1 ... 7) de l'un des chemins candidats (P1 ... 3) déterminant une métrique de route pour au moins une partie des chemins candidats (P1 ... 3),
- le chemin candidat (P1 ... 3) étant rejeté si sa métrique de route dépasse une valeur seuil par le haut / par le bas et
- une métrique de route étant utilisée, laquelle utilise, en tant que métrique de lien, un taux d'arrivée de paquets de données corrigé d'un facteur de pénalisation.

**2.** Procédé selon la revendication 1, un noeud de départ ou un noeud terminal du chemin candidat (P1 ... 3) étant utilisé en tant que l'au moins un noeud.

**3.** Procédé selon la revendication 1, un noeud intermédiaire du chemin candidat (P1 ... 3) étant utilisé en tant que l'au moins un noeud.

**4.** Procédé selon l'une des revendications précédentes, la métrique de route étant obtenue par la formule suivante:

$$R = \prod_{Links} LM = \prod_{Links} (D \cdot P),$$

dans laquelle

R = métrique de route,
LM = métrique de lien,
D = taux d'arrivée de paquets de données,

P = facteur de pénalisation,
Links = nombre de liens du chemin candidat.

**5.** Procédé selon l'une des revendications précédentes, la métrique de route étant déterminée à la réception d'un message «Route Reply».

**6.** Procédé selon l'une des revendications 1 à 4, la métrique de route étant déterminée à l'envoi d'un message «Route Request» et retransmise avec le message «Route Request».

**7.** Noeud de réseau (K1 ... 7) avec au moins un dispositif récepteur pour recevoir des messages de réponse de route, en particulier des messages «Route Reply», et au moins un dispositif de traitement de données qui est aménagé de manière telle que, à la réception d'un message de réponse de route afférent à un chemin candidat (P1 ... 3), une métrique de route est déterminée pour au moins une partie du chemin candidat (P1 ... 3), le chemin candidat (P1 ... 3) étant rejeté si une valeur seuil est au moins atteinte par sa métrique de route, et le dispositif de traitement de données étant aménagé de manière telle qu'une métrique de route est utilisée, dans laquelle est utilisé, en tant que métrique de lien, un taux d'arrivée de paquets de données corrigé d'un facteur de pénalisation.

**8.** Noeud de réseau (K1 ... 7) selon la revendication 7, lequel est configuré de manière telle que le chemin candidat (P1 ... 3) n'est rejeté que si le noeud de réseau (K1 ... 7) correspond à un noeud de départ ou à un noeud terminal du chemin candidat (P1 ... 3) .

**9.** Réseau avec des noeuds (K1 ... 7) selon la revendication 7 et/ou 8.

EP 1 999 906 B1

## IN DER BESCHREIBUNG AUFGEFÜHRTE DOKUMENTE

### In der Beschreibung aufgeführte Patentdokumente

- US 20040233850 A1

- WO 0169866 A1

### In der Beschreibung aufgeführte Nicht-Patentliteratur

- Hop-by-Hop Quality of Service Routing. **Aus van Mieghem et al.** Computer Networks. Elsevier Science Publishers B.V, 05. November 2001, vol. 37, 400-423